# EUROPÄISCHE PATENTSCHRIFT

(11) **EP 1 865 148 B1**
(45) Veröffentlichungstag und Bekanntmachung des Hinweises auf die Patenterteilung: **16.05.2012**
(21) Anmeldenummer: 07011048.1
(22) Anmeldetag: 05.06.2007
(51) Int. Cl.: F01D 5/14, F04D 29/38, F04D 29/32

(54) **Strömungsarbeitsmaschine mit Rotoren hoher spezifischer Energieabgabe**
Flow machine with rotors with a high specific energy transfer
Machine de traitement des écoulements dotée de rotors de distribution d'énergie supérieure spécifique

(30) Priorität: 09.06.2006 DE 102006026968
(43) Veröffentlichungstag der Anmeldung: 12.12.2007
(73) Patentinhaber: Rolls-Royce Deutschland Ltd & Co KG, 15827 Blankenfelde-Mahlow (DE)
(72) Erfinder: Gümmer, Volker, 15831 Mahlow (DE)
(74) Vertreter: Weber, Joachim

(56) Entgegenhaltungen:
- EP-A1- 0 441 097
- EP-A2- 1 118 747
- EP-A2- 1 186 747
- EP-A2- 1 657 401

## Beschreibung

Die vorliegende Erfindung bezieht sich auf Strömungsarbeitsmaschinen wie Bläser, Verdichter, Pumpen und Ventilatoren axialer und halbaxialer Bauart mit gasförmigem oder flüssigem Arbeitsmedium (Fluid).

Die Strömungsarbeitsmaschine besteht aus einer oder mehreren Stufen. Jede Stufe umfasst einen Rotor und einen Stator.

Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein.

Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind von einem Gehäuse umgeben. Die Maschine kann einen Stator vor dem ersten Rotor aufweisen (Vorleitrad).

Die Statoren können -abweichend von der unbeweglichen Fixierung- drehbar gelagert sein und zur Verstellung eine von außerhalb des Ringkanals zugängliche Spindel besitzen.

Alternativ kann die Strömungsarbeitsmaschine eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen.

Weiterhin kann die besagte Strömungsarbeitsmaschine bei Mehrstufigkeit zwei gegenläufige Wellen besitzen, sodass die Rotorschaufelreihen von Stufe zu Stufe die Drehrichtung wechseln. Hierbei existieren keine Statoren zwischen gegenläufigen Rotoren.

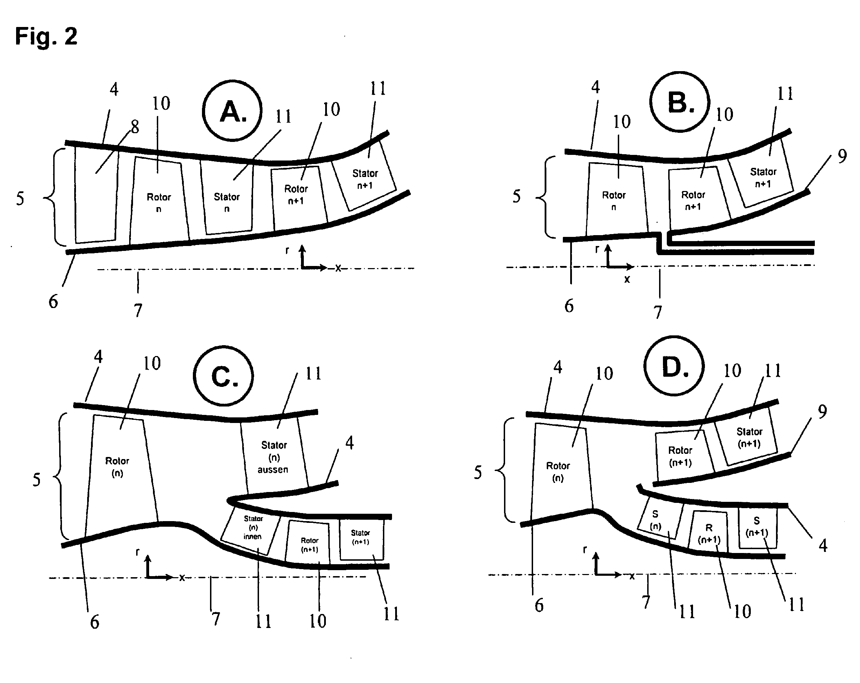

Die Fig. 2 zeigt beispielhaft vier nach dieser Beschreibung mögliche Konfigurationen der Strömungsarbeitsmaschine.

Die Stabilitätsgrenze von Strömungsarbeitsmaschinen wie Bläsern, Verdichtern, Pumpen und Ventilatoren wird maßgeblich durch die Wahl des Arbeitskoeffizienten (spezifische Enthalpieumsetzung Δ h bezogen auf das Quadrat der Rotorblattgeschwindigkeit U²) bestimmt. Aus diesem Grund wird ein Arbeitskoeffizient von 0,5 üblicherweise nicht überschritten. Dann sind für die heute erforderlichen hohen Stufendruckverhältnisse sehr hohe Rotorblattgeschwindigkeiten zu wählen, die gegebenenfalls zu einer im Überschall liegenden Relativzuströmung am Rotor führen. In diesem Fall ergeben sich nach dem heutigen Stand der Technik Rotorschaufelformen mit hohem Staffelungswinkel, niedriger Profilwölbung und einer hohen relativen Drallkomponente der Rotorabströmgeschwindigkeit. Mit diesen Eigenschaften ist eine steil geneigte Stufenkennlinie (Stufendruckverhältnis aufgetragen über dem Massenstrom) verbunden. Dem entsprechend kommt es bei einer geringen Abnahme des Massenstroms zu einem erheblichen Anstieg des Stufendruckverhältnisses, der bei mehrstufigen Strömungsarbeitsmaschinen zu einer schnell zunehmenden Verstimmung der einzelnen Stufen beiträgt. Der für einen sicheren Betrieb notwendige Abstand zwischen Betriebslinie und Stabilitätsgrenze im Kennfeld der Strömungsarbeitsmaschine muss daher sehr groß sein. Für einen Triebwerkverdichter beispielsweise sind üblicherweise 25% bis 30% des Auslegungsdruckverhältnisses als Stabilitätsmarge vorzusehen.

Bauweisen nach dem Stand der Technik orientieren sich an Arbeitskoeffizienten unterhalb 0,5. Die Einhaltung dieses Entwurfskriteriums erfordert zur Erbringung hoher Druckverhältnisse der Strömungsarbeitsmaschine entweder sehr hohe Rotorblattgeschwindigkeiten und/oder eine hohe Anzahl von Stufen. Zudem ist ein hohes Maß an Stabilitätsmarge vorzusehen.

In Hochdruckverdichtern von Flugtriebwerken beispielsweise werden aus diesem Grund bei entsprechend hohen Rotorblattgeschwindigkeiten Rotorzuströmmachzahlen von beträchtlich über eins zugelassen, mit der Folge hoher Strömungsverluste. In einem solchen Verdichter ist die Gesamtkennlinie sowie jede einzelne Stufenkennlinie sehr steil beschaffen, was zu einer starken Stufenverstimmung bei Teillastbetrieb führt. Die Anzahl der Hochdruckverdichterstufen beträgt dennoch stets 6 oder mehr.

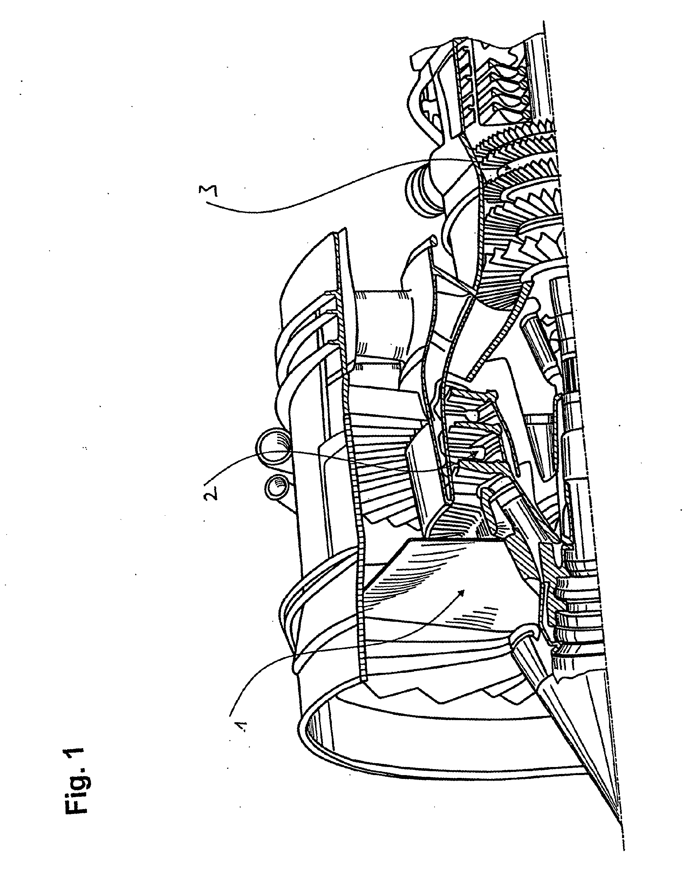

Einer etwas anderen Problematik sind die Boosterstufen eines Zweiwellentriebwerks ausgesetzt. Ihnen steht wegen der direkten Drehzahlkopplung an den Fan (Bläser) nur eine geringe Rotorblattgeschwindigkeit zur Verfügung, sodass nach gegenwärtigem Stand der Technik extrem viele Boosterstufen für eine geringe Steigerung des Druckverhältnisses eingesetzt werden müssen. Fig. 1 zeigt hierzu den Stand der Technik am Beispiel des Verdichtungssystems eines Flugtriebwerks mittlerer Schubklasse.

Aus der EP 1 657 401 A2 ist eine Schaufel einer Strömungsarbeitsmaschine mit erweiterter Randprofiltiefe bekannt, bei welcher in einem Naben- bzw. Gehäuse angrenzenden Schaufelbereich eine Erweiterung der Profiltiefe vorgesehen ist.

Die EP 1 118 747 A2 offenbart eine Schaufel einer Turbomaschine, welche mit zumindest einem Durchströmungskanal versehen ist.

Aus der EP 1 186 747 A2 ist eine weitere Ausgestaltung einer Schaufel einer Strömungsarbeitsmaschine offenbart.

Der vorliegenden Erfindung liegt die Aufgabe zugrunde, eine Strömungsarbeitsmaschine der eingangs genannten Art zu schaffen, welche unter Vermeidung der Nachteile des Standes der Technik durch eine spezielle Rotorkonfiguration eine sehr wirkungsvolle Erhöhung des realisierbaren Arbeitskoeffizienten bei weiterhin ausreichender Stabilität erreicht.

Erfindungsgemäß wird die Aufgabe durch die Merkmalkombination des Hauptanspruchs gelöst, die Unteransprüche zeigen weitere vorteilhafte Ausgestaltungen der Erfindung.

Im Einzelnen betrifft die Erfindung eine Strömungsarbeitsmaschine mit mindestens einer für extrem hohe Arbeitskoeffizienten ausgelegten Rotorschaufelreihe, die -in ihrem Mittelschnitt oder/und gemittelt über der Schaufelhöhe betrachtet- zum einen eine im Wesentlichen drallfreie Absolutzuströmung aufweist und zum anderen eine im Wesentlichen drallfreie Relativabströmung erzeugt.

Dabei ist eine im Wesentlichen drallfreie Absolutzuströmung dadurch gekennzeichnet, dass stromauf des betreffenden Rotors entweder nur Baugruppen ohne umlenkende Streben oder Beschaufelungen angeordnet sind oder die stromauf angeordneten Beschaufelungen oder Streben im Bereich ihrer Hinterkante im Wesentlichen eine Orientierung in Meridianrichtung aufweisen.

Eine im Wesentlichen drallfreie Relativabströmung ist dadurch gekennzeichnet, dass der betreffende Rotor im Bereich seiner Hinterkante im Wesentlichen eine Orientierung in Meridianrichtung aufweist. Der mittlere bzw. gemittelte Austrittsmetallwinkel der Rotorschaufel muss hierbei (in Kombination mit einem mittleren bzw. gemittelten Eintrittsmetallwinkel von größer 40°) zwischen -10° und 5° betragen.

Im Besonderen betrifft die Erfindung die Anwendung der hier beschriebenen Hochlast (HL)-Rotorgestaltung auf die erste Rotorschaufelreihe, die in Strömungsrichtung hinter dem Fan im Kernstromabschnitt eines Flugtriebwerks angeordnet ist.

Weiterhin betrifft die Erfindung die Anwendung des Rotorgestaltungskonzepts auf mehrere in Strömungsrichtung aufeinander folgende Stufen der Strömungsarbeitsmaschine.

Im Stand der. Technik ist bislang unerkannt geblieben, dass sich das erforderliche Maß an Stabilitätsmarge reduzieren und gleichzeitig die realisierbare Höhe des Arbeitskoeffizienten erhöhen lässt, wenn nur die Strömungswinkel vor und hinter dem Rotor und somit die Gestaltung der Rotorschaufel in besonderer Weise ausgewählt werden.

Im Folgenden wird die Erfindung anhand von Ausführungsbeispielen in Verbindung mit den Figuren beschrieben. Dabei zeigt:
- Fig. 1:: ein Beispiel für ein Verdichtungssystem (Strömungsarbeitsmaschine) eines Flugtriebwerks mittlerer Schubklasse (Stand der Technik),
- Fig. 2:: eine schematische Darstellung erfindungsgemäß betroffener Strömungsarbeitsmaschinen,
- Fig. 3:: die Definition von Meridianstromlinien und Stromlinienprofilschnitten,
- Fig. 4a:: den Rotor einer Strömungsarbeitsmaschine. im Meridianschnitt,
- Fig. 4b:: die Anordnung der Geschwindigkeitsdreiecke und des Profils im Rotormittelschnitt, nach dem Stand der Technik und gemäß Erfindung,
- Fig. 5:: die Definition der Metallwinkel an Vorder- und Hinterkante eines Rotor- oder Statorschaufelschnitts,
- Fig. 6:: die erfindungsgemäße Festlegung der Metallwinkel des Rotors im Stromlinienmittelschnitt,
- Fig. 7:: die Bestimmung von Mittelwerten erfindungsgemäß relevanter Größen über der Rotorschaufelhöhe auf Grundlage von 21 Stromlinienschnitten,
- Fig. 8:: erfindungsgemäß besonders wirksame Konfigurationen mit Hochlast (HL)-Rotorgestaltung.

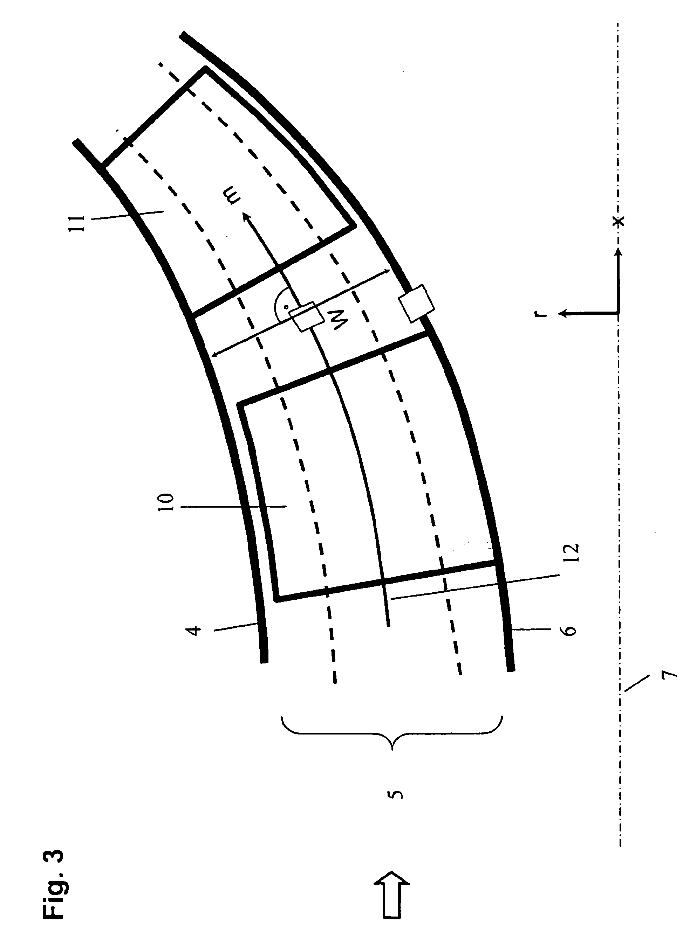

Die Fig. 3 gibt eine genaue Definition der Meridianstromlinien und der Stromlinienprofilschnitte. Die mittlere Meridianstromlinie wird durch die geometrische Mitte des Ringkanals gebildet. Errichtet man an jedem Ort der mittleren Stromlinie eine Normale, so erhält man zum einen den Verlauf der Ringkanalweite W entlang des Strömungspfades und zum anderen eine Anzahl von Normalen, mit deren Hilfe sich bei gleicher relativer Unterteilung in Richtung der Kanalhöhe weitere Meridianstromlinien ergeben. Der Schnitt einer Meridianstromlinie mit einer Schaufel ergibt einen Stromlinienprofilschnitt, der Schnitt der mittleren Meridianstromlinie mit einer Schaufel ergibt den sogenannten Mittelschnitt.

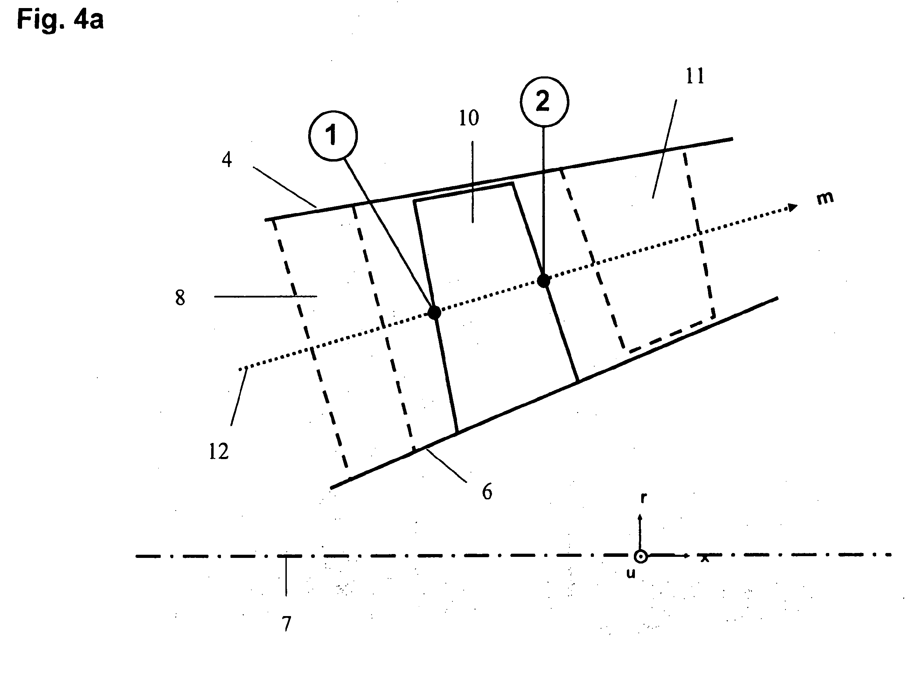

Die Fig. 4a zeigt einen Teil einer Strömungsarbeitsmaschine im Meridianschnitt, hier skizziert als eine Anordnung aus Vorleitrad (Stator), Rotor und Stator. Ebenfalls gezeigt ist die mittlere Meridianstromlinie, die den Mittelschnitt der Maschine kennzeichnet und deren Schnitt mit den Rotorkanten durch die Punkte 1 und 2 markiert ist. Die vorliegende Erfindung wird festgemacht an strömungstechnischen und geometrischen Gegebenheiten in der Vorder- und Hinterkantenebene des betreffenden Rotors. Die erfindungsrelevanten Größen werden als Mittelwert entlang der Rotorschaufelhöhe und direkt im Mittelschnitt (auf der mittleren Meridianstromlinie) festgelegt.

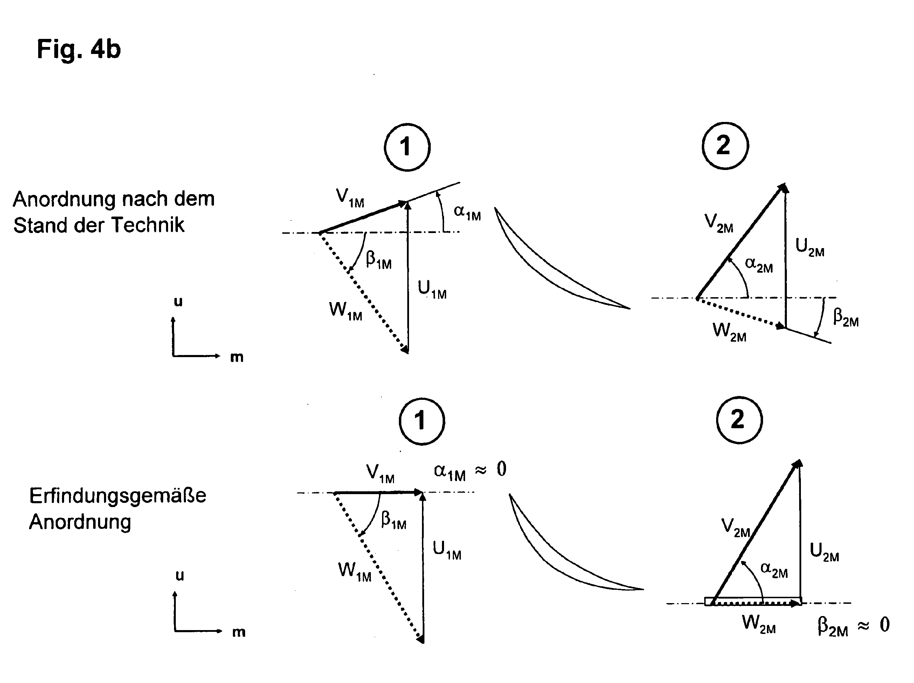

In Fig. 4b werden zur Verdeutlichung der erfindungsgemäßen Lösung die Rotorschaufelgeometrie und die Strömungsgeschwindigkeitsvektoren im Rotormittelschnitt betrachtet. Dargestellt sind die Geschwindigkeitsdreiecke (Vektoren) am Punkt 1 vor dem Rotor, das Mittelschnittprofil des Rotors und die Geschwindigkeitsdreiecke (Vektoren) am Punkt 2 hinter dem Rotor.

Der obere Bildteil der Fig. 4b zeigt eine Anordnung nach dem Stand der Technik. Charakteristisch dafür ist eine Rotorzuströmung mit der Absolutgeschwindigkeit V1M unter dem absoluten Zuströmwinkel α1M. Der Winkel α1M ist üblicherweise deutlich größer als null und in seltenen Fällen gleich null. Daraus ergibt sich mit der Umfangsgeschwindigkeit U1M eine Relativzuströmung mit der Geschwindigkeit W1M unter dem relativen Zuströmwinkel β1M. Das Rotormittelschnittprofil ist mäßig gewölbt und lenkt die Strömung von W1M auf W2M um. Der sich ergebende relative Abströmwinkel β2M bleibt dabei als besonderes Kennzeichen signifikant größer als null, z. B. 30°.

Der untere Bildteil der Fig. 4b zeigt eine erfindungsgemäße Anordnung mit Hochlast (HL)-Gestaltung des Rotors. Charakteristisch dafür ist eine Rotorzuströmung mit der Absolutgeschwindigkeit V1M unter dem absoluten Zuströmwinkel α1. Der Winkel α1M liegt betragsmäßig nahe bei null (annähernd Drallfreiheit im Absolutsystem). Daraus ergibt sich mit der Umfangsgeschwindigkeit U1M eine Relativzuströmung mit der Geschwindigkeit W1M unter dem relativen Zuströmwinkel β1M. Das Rotormittelschnittprofil ist sehr ausgeprägt gewölbt und lenkt die Strömung stark von W1M auf W2M um (extreme Strömungsumlenkung). Der sich ergebende relative Abströmwinkel β2M liegt betragsmäßig nahe bei Null (annähernd Drallfreiheit im Relativsystem).

Desweiteren gilt es nun, die erfindungsgemäß angestrebte Form der Geschwindigkeitsdreiecke an geometrischen Merkmalen der Rotorschaufel festzumachen, die als entscheidendes Gestaltungskriterium verwendet werden können.

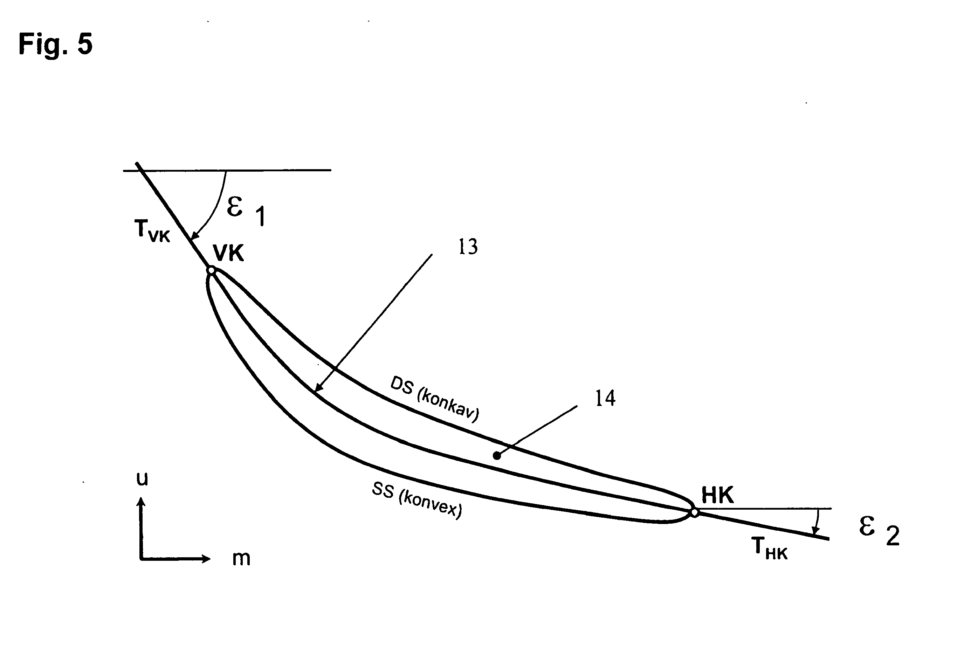

Die Fig. 5 zeigt zunächst schematisch die Definition der Metallwinkel an Vorder- und Hinterkante einer Rotor- oder Statorschaufel. Dargestellt ist ein Stromlinienprofilschnitt der Schaufel auf einer Meridianstromfläche (u-m-Ebene). Zur Bestimmung der Metallwinkel ist es notwendig, in der Ebene des Schaufelprofilschnitts die Profilskelettlinie, die Mittellinie zwischen Druckseite (DS) und Saugseite (SS) des Profils, zu ermitteln. Die am Vorder- und Hinterkantenpunkt (VK, HK) an die Profilskelettlinie angelegten Tangenten TVK und THK quantifizieren die Ausrichtung des Profils. Der Eintrittsmetallwinkel ε1M ergibt sich schließlich zwischen der Tangente TVK und der Meridianrichtung m, der Austrittsmetallwinkel ε2M ergibt sich zwischen der Tangente THK und der Meridianrichtung m.

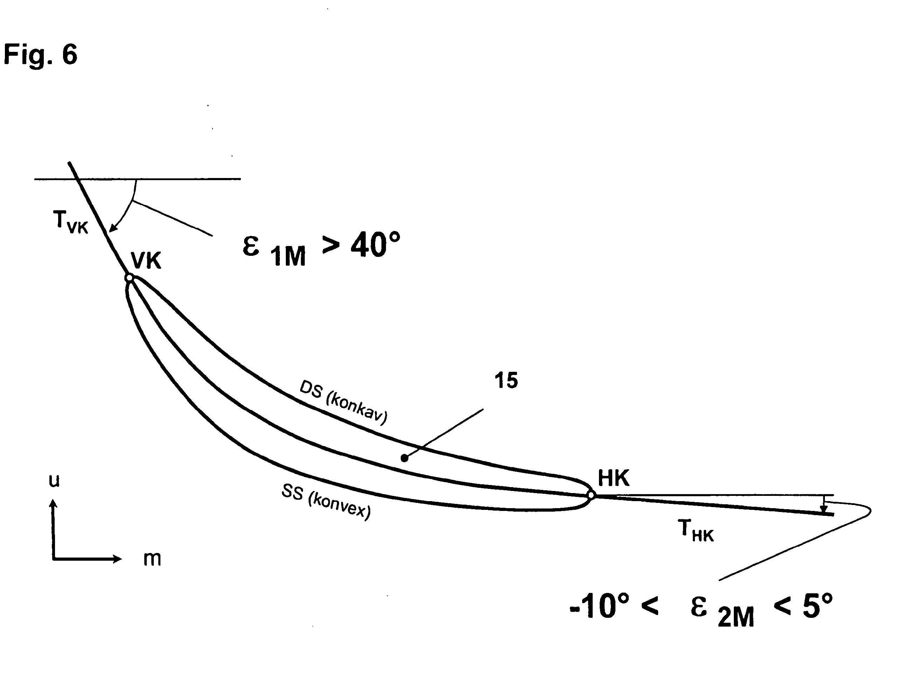

Die Fig. 6 zeigt nun den Mittelschnitt eines Rotors mit Maßgaben für die Metallwinkel ε1M und ε2M. So ist erfindungsgemäß ein hoher Eintrittsmetallwinkel ε1M von größer als 40° mit einem zwischen -10° und 5° festgelegten Austrittsmetallwinkel ε2M zu kombinieren. Dies führt auf eine Umlenkung bzw. Wölbung im Mittelschnitt des Rotors, die weit über dem Stand der Technik liegt.

Die Darstellung der Geschwindigkeitsdreiecke und der Rotorprofilform erfolgte hier zunächst am Mittelschnitt des Rotors. Sie ist jedoch ebenfalls für eine Anzahl weiterer, auf anderen Schaufelhöhen befindlicher Stromlinienschnitte des Rotors durchzuführen, um neben den Größen im Mittelschnitt ebenfalls die erfindungsgemäß relevanten, über der Schaufelhöhe gemittelten Größen zu bestimmen.

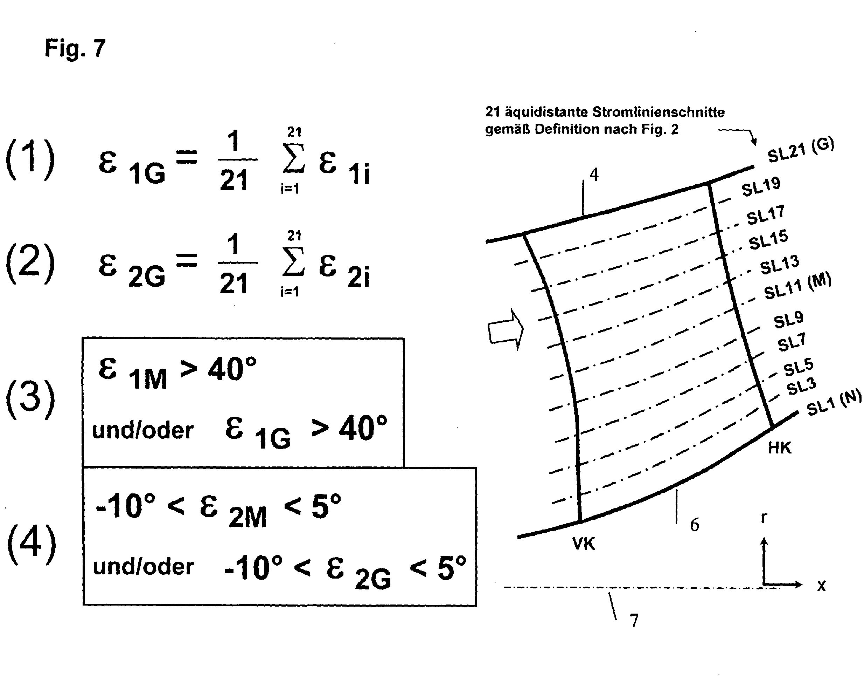

Die Methode zur Bestimmung der über Schaufelhöhe gemittelten Größen ist in Fig. 7 gegeben. So ergibt sich beispielsweise der gemittelte Rotoreintrittsmetallwinkel ε1G durch arithmetische Mittelung der auf 21 äquidistanten Stromlinienschnitten festgestellten lokalen Werte. Analog ist bei Bestimmung des gemittelten Rotoraustrittsmetallwinkels ε2G zu verfahren, siehe Formeln (1) und (2) in Fig. 7.

Die erfindungsgemäße Hochlast (HL)-Gestaltung eines Rotors ist schließlich wie folgt zu beschreiben, siehe Formel (3) und (4) in Fig. 7:
für die Ein- und Austrittsmetallwinkel muss erfüllt sein:
   a.) ε1M > 40° und/oder ε1G > 40°, und
   b.) -10° < ε2M < 5° und/oder -10° < ε2G < 5°

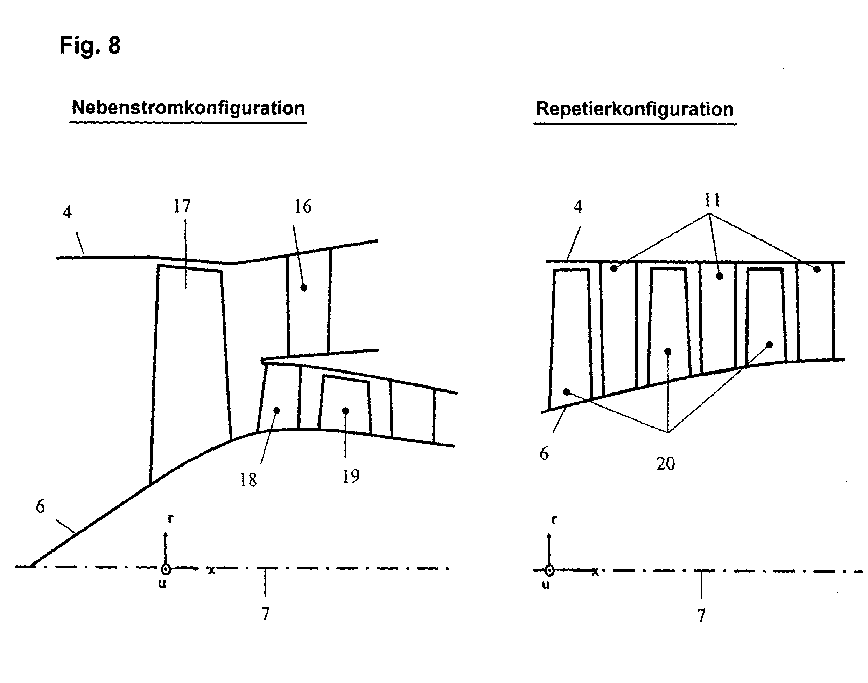

Es kommt zu einer besonders wirksamen Ausnutzung der HL-Rotorgestaltung, wenn erfindungsgemäß, wie in Fig. 8 dargestellt, der erste im Kernstrombereich einer Strömungsarbeitsmaschine mit Nebenstromkonfiguration angeordnete Rotor auf diese Weise ausgeführt wird.

Weitere Vorteile für das Betriebsverhalten von Einzelstufen in einem Mehrstufenverband ergeben sich bei einer erfindungsgemäßen Repetierung der HL-Rotorgestaltung über mehrere in Strömungsrichtung direkt aufeinanderfolgende Stufen.

Die in vorliegender Erfindung spezifizierte Hochlast-Rotorgestaltung ermöglicht durch einfache Maßnahmen ein bislang unerreichtes Maß an Leistungskonzentration und Kompaktbauweise in Strömungsmaschinen wie Bläsern, Verdichtern, Pumpen und Ventilatoren. Bei mehrstufigen Strömungsarbeitsmaschinen ergibt sich zudem eine deutlich verbesserte Stufenabstimmung bei Teillastbetrieb. Insbesondere bei zwingend langsam laufenden Maschinen wie beispielsweise Boosterstufen eines Flugtriebwerkes wird eine Erhöhung der Belastbarkeit um den Faktor 2 bis 3 ermöglicht. Für ein gegebenes Druckverhältnis der Strömungsmaschine lässt sich unter Beibehaltung oder Verbesserung des Wirkungsgrades von bis zu 2% die Anzahl der verbauten Teile um mindestens 50% gegenüber konventionell gebauten Boostern senken. Die Kosten und das Gewicht des Triebwerks sinken um etwa 5%. Bei Einsatz des Konzeptes im Verdichter eines Flugtriebwerks mit rund 25000 Pfund Schub ergibt sich unmittelbar eine Reduzierung des spezifischen Kraftstoffverbrauches von bis zu 0,5%. Weiteres Potential liegt in der reduzierten Triebwerkslänge und der daraus resultierenden möglichen Verringerung der Laufspalte im Kerntriebwerkssektor (Hochdruckverdichter).

### Bezugszeichenliste

- 1: Fan (1 Stufe)
- 2: Booster (3 Stufen)
- 3: Hochdruckverdichter (10 Stufen)
- 4: Gehäuse
- 5: Ringkanal
- 6: Rotortrommel (Nabe)
- 7: Maschinenachse
- 8: Vorleitrad
- 9: Rotortrommel 2 (Nabe)
- 10: Rotor
- 11: Stator
- 12: Mittlere Meridian-Stromlinie (Mittelschnitt)
- 13: Profilskelettlinie
- 14: Schaufelprofilschnitt
- 15: Rotormittelschnitt
- 16: Fan-Nebenstrom-Stator
- 17: Fan
- 18: Fan-Kemstrom-Stator
- 19: HL-Gestaltung am ersten Kernstrom-Rotor
- 20: HL-Gestaltung an aufeinander folgenden Rotoren mehrstufiger Strömungsarbeitsmaschinen

## Patentansprüche

1. Strömungsarbeitsmaschine mit mindestens einer für Arbeitskoeffizienten, welche definiert sind durch die spezifische Enthalpieumsetzung Δ h, bezogen auf das Quadrat der Rotorblattgeschwindigkeit U ausgelegten Rotorschaufelreihe, die, in ihrem Mittelschnitt oder/und gemittelt über der Schaufelhöhe betrachtet, eine im Wesentlichen drallfreie Relativabströmung erzeugt, **dadurch gekennzeichnet, dass** die betreffende Rotorschaufelreihe (10) im Bereich ihrer Hinterkante im Wesentlichen eine Orientierung in Richtung einer Meridianstromlinie des Ringkanals (5) der Strömungsarbeitsmaschine aufweist, wobei der mittlere Austrittsmetallwinkel (ε2M) oder der gemittelte Austrittsmetallwinkel (ε2G) einer Rotorschaufel (10) zwischen -10° und 5° beträgt und der Eintrittsmetallwinkel (ε1M) > 40° ist, wobei sich der Eintrittsmetallwinkel (ε1M) zwischen einer Tangente (TVK) und einer Meridianrichtung (m) ergibt und wobei sich der Austrittsmetallwinkel (ε2M) zwischen einer Tangente (THK) und der Meridianrichtung (m) ergibt, wobei in einer Ebene des Schaufelprofils eine Profilskelettlinie als Mittellinie zwischen Druckseite (DS) und Saugseite (SS) des Profils ermittelt wird und an einem Vorder- und Hinterkantenpunkt (VK, HK) an die Profilskelettlinie die Tangenten (TVK) und (THK) angelegt sind..

2. Strömungsarbeitsmaschine nach Anspruch 1, mit mindestens einer für Arbeitskoeffizienten, welche definiert sind durch die spezifische Enthalpieumsetzung Δ h, bezogen auf das Quadrat der Rotorblattgeschwindigkeit U ausgelegten Rotorschaufelreihe, die, in ihrem Mittelschnitt oder/und gemittelt über der Schaufelhöhe betrachtet, eine im Wesentlichen drallfreie Absolutzuströmung aufweist, **dadurch gekennzeichnet, dass** stromauf der betreffenden Rotorschaufelreihe (10) entweder nur Baugruppen ohne umlenkende Streben oder Beschaufelungen angeordnet sind oder die stromauf angeordneten Beschaufelungen oder Streben im Bereich ihrer Hinterkante im Wesentlichen eine Orientierung in Meridianrichtung eines Ringkanals (5) der Strömungsarbeitsmaschine aufweisen.

3. Strömungsarbeitmaschine nach Anspruch 1 oder 2, **dadurch gekennzeichnet, dass** der mittlere bzw. gemittelte Austrittsmetallwinkel (ε2M) der Rotorschaufel, in Kombination mit einem mittleren bzw. gemittelten Eintrittsmetallwinkel (ε1M) von größer als 40°, zwischen -10° und 5° beträgt.

4. Strömungsarbeitsmaschine nach einem der Ansprüche 1 bis 3, **dadurch gekennzeichnet, dass** die Rotorgestaltung in mehreren in Strömungsrichtung aufeinander folgenden Stufen vorgesehen ist.

5. Flugtriebwerk mit einer als Verdichter axialer Bauart ausgebildeten Strömungsarbeitsmaschine nach einem der Ansprüche 1 bis 3, **dadurch gekennzeichnet, dass** die Rotorgestaltung auf einer ersten Rotorschaufelreihe Anwendung findet, die in Strömungsrichtung hinter einem Fan (1) im Kernstromabschnitt des Flugtriebwerks angeordnet ist.

## Claims

1. Fluid-flow machine with at least one rotor blade row designed for work coefficients defined by the specific enthalpy transformation Δh relative to the square of the rotor blade velocity U, with the rotor blade row as viewed in its center section and/or averaged over the blade height generating an essentially swirl-free relative outflow, **characterized in that** the respective rotor blade row (10) in its trailing edge area is essentially orientated in the direction of a meridional flow line of the annular duct (5) of the fluid-flow machine, with the mean exit metal angle (ε2M) or the averaged exit metal angle (ε2G) of a rotor blade (10) ranging between -10° and 5° and the entry metal angle (ε1M) exceeding 40°, with the entry metal angle (ε1M) being established between a tangent (TVK) and the meridional direction (m), and with the exit metal angle (ε2M) being established between a tangent (THK) and the meridional direction (m), with a profile skeleton line in one plane of the blade profile being determined as center line between the pressure side (DS) and the suction side (SS) of the profile and the tangents (TVK) and (THK) being drawn to the profile skeleton line in a leading and trailing edge point (VK, HK).

2. Fluid-flow machine in accordance with Claim 1, with at least one rotor blade row designed for work coefficients defined by the specific enthalpy transformation Δh relative to the square of the rotor blade velocity U, with the rotor blade row as viewed in its center section and/or averaged over the blade height featuring an essentially swirl-free absolute inflow, **characterized in that** upstream of the respective rotor blade row (10) either only assemblies without deflecting struts or bladings are arranged or the upstreamly arranged bladings or struts in their trailing edge area essentially feature an orientation in the meridional direction of an annular duct (5) of the fluid-flow machine.

3. Fluid-flow machine in accordance with Claim 1 or 2, **characterized in that** the mean or averaged exit metal angle (ε2M) of the rotor blade ranges between -10° and 5° in combination with a mean or averaged entry metal angle (ε1M) exceeding 40°.

4. Fluid-flow machine in accordance with one of the Claims 1 to 3, **characterized in that** the rotor design provides several stages following each other in the flow direction.

5. Aircraft engine with a fluid-flow machine designed as compressor of the axial type in accordance with one of the Claims 1 to 3, **characterized in that** the rotor design applies to a first rotor blade row arranged in the flow direction downstream of a fan (1) in the core flow section of the aircraft engine.

## Revendications

1. Turbomachine comprenant au moins une rangée d'aubes de rotor dimensionnée pour des coefficients de travail définis par la transformation spécifique d'enthalpie Δh par rapport au carré de la vitesse U des aubes de rotor, laquelle rangée, considérée dans sa section moyenne et/ou médiane sur la hauteur d'aube, génère un écoulement d'évacuation relatif pratiquement exempt de tourbillons, **caractérisée en ce que** dans la zone de son bord de fuite, la rangée d'aubes de rotor (10) concernée présente pour l'essentiel une orientation en direction d'une ligne méridienne d'écoulement du canal annulaire (5) de la turbomachine, sachant que l'angle métal moyen de sortie (ε2M) ou l'angle métal médian de sortie (ε2G) d'une aube de rotor (10) est compris entre -10° et 5°, et que l'angle métal d'entrée (ε1M) est > 40°, que l'angle métal d'entrée (ε1M) est formé entre une tangente (TVK) et une direction méridienne (m) et que l'angle métal de sortie (ε2M) est formé entre une tangente (THK) et la direction méridienne (m), que dans un plan du profil d'aube est déterminée une ligne médiane de profil en tant que ligne moyenne entre le côté refoulement (DS) et le côté aspiration (SS) du profil, et que les tangentes (TVK) et (THK) s'appuient respectivement sur un point du bord d'attaque et du bord de fuite (VK, HK) sur la ligne médiane de profil.

2. Turbomachine selon la revendication n° 1, comprenant au moins une rangée d'aubes de rotor dimensionnée pour des coefficients de travail définis par la transformation spécifique d'enthalpie Δh par rapport au carré de la vitesse U des aubes de rotor, laquelle rangée, considérée dans sa section moyenne et/ou médiane sur la hauteur d'aube montre un écoulement d'affluence absolu pratiquement exempt de tourbillons, **caractérisée en ce qu'**en amont de la rangée d'aubes de rotor (10) concernée ou bien sont disposés uniquement des sous-ensembles sans entretoises déflectrices ni aubages, ou bien les aubages ou entretoises disposés en amont présentent, dans la zone de leur bord de fuite, pour l'essentiel une orientation dans la direction méridienne d'un canal annulaire (5) de la turbomachine.

3. Turbomachine selon la revendication n° 1 ou n° 2, **caractérisée en ce que** l'angle métal moyen ou médian de sortie (ε2M) de l'aube de rotor, en combinaison avec un angle métal moyen ou médian d'entrée (ε1M) supérieur à 40°, est compris entre -10° et 5°.

4. Turbomachine selon une des revendications n° 1 à n° 3, **caractérisée en ce que** la structure de rotor est prévue dans plusieurs étages consécutifs dans le sens d'écoulement.

5. Moteur d'avion avec une turbomachine conçue en tant que compresseur de type axial selon une des revendications 1 à 3, **caractérisé en ce que** la structure de rotor est mise en oeuvre sur une première rangée d'aubes de rotor qui est disposée dans le sens d'écoulement en aval d'une soufflante (1) dans la section du flux central du moteur d'avion.
